# EUROPÄISCHE PATENTANMELDUNG

(11) **EP 0 913 182 A1**
(43) Veröffentlichungstag der Anmeldung: **06.05.1999**
(21) Anmeldenummer: 98118759.4
(22) Anmeldetag: 05.10.1998
(51) Int. Cl.: B01D 33/333, B01D 33/50

(54) **Evolventen-Siebbandmaschine**

(30) Priorität: 21.10.1997 DE 19746368; 26.03.1998 DE 19813287
(71) Anmelder: Metallgesellschaft Aktiengesellschaft, 60325 Frankfurt am Main (DE)
(72) Erfinder: Schmidt, Ernst-Ludwig, 35452 Heuchelheim (DE)

(57) **Zusammenfassung**

Evolventen-Siebbandmaschine mit zu einem endlos rotierenden Band verbunden Einzelsieben, deren jeweiliger Querschnitt evolventenförmig gestaltet ist und die auf ihrer Außenseite jeweils ein Siebgewebe (2) aufweisen.

Auf der Anströmseite der Einzelsiebe sind im Abstand a von 30 bis 60 mm Stege (1) vertikal angeordnet, deren Breite b 20 bis 60 mm beträgt und die eine Dicke von 3 bis 5 mm aufweisen.

## Beschreibung

Die Erfindung bezieht sich auf eine Evolventen-Siebbandmaschine mit zu einem endlos rotierenden Band verbundenen Einzelsieben, deren jeweiliger Querschnitt evolventenförmig gestaltet ist und die auf ihrer Außenseite jeweils ein Siebgewebe aufweisen.

Siebbandmaschinen sind bekannt. In der DE-PS-44 43 091 wird ein Trommelsieb mit einem im Verhältnis zur Breite der Mantelfläche größeren Durchmesser der Siebtrommel beschrieben. Bei diesem Trommelsieb sind an den Stirnseiten der Siebtrommel Laufrollen angeordnet, deren Drehachsen parallel zur Drehachse der Siebtrommel verlaufen und die sich in einer stationären ringförmigen Seitenführung bewegen.

In der DE-AS 1005492 wird eine Vorrichtung zur Reinigung von Flüssigkeiten, insbesondere Wasser und Abwasser, unter Verwendung von aneinander gereihten Sieben beschrieben, wobei die Siebe zu einem endlos rotierenden Band oder einer rotierenden Trommel vereinigt sind. Der Querschnitt eines jeden Einzelsiebes verläuft dabei in Form einer aus zwei zusammenstoßenden nach einer ohne Wendepunkt stetig nach außen gekrümmten gebildeten Kurve. Der Querschnitt der Einzelsiebe ist somit evolventenförmig.

Im Prospekt der Firma Lurgi 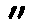 Wasseraufbereitung, Mechanische Reinigung, 3TB01d/1.96" werden Anlagen zur mechanischen Wasserreinigung beschrieben, bei denen ebenfalls Evolventen-Siebbandmaschinen eingesetzt werden. Dabei wird angeführt, daß der Einsatz eines Siebbandes oder einer Siebtrommel nur in Kombination mit einer Vorreinigung mittels Rechen möglich ist. Der Feinreinigung ist somit eine Grobreinigung vorgeschaltet, wobei es sich um örtlich getrennte Reinigungen handelt, die jeweils einen Arbeitsgang aufweisen. Es wird herausgestellt, daß eine Kombination von Rechen und Sieben durch die verschiedenen Verunreinigungen der Gewässer an keiner Stelle mehr zu umgehen ist. Bei dieser bekannten Verfahrensweise ist nachteilig, daß die Anordnung einer solchen Anlage zur mechanischen Wasserreinigung mit einem relativ großen Platzbedarf für die vorzuschaltende Grobreinigung verbunden ist.

Der Erfindung liegt daher die Aufgabe zugrunde, eine Evolventen-Siebbandmaschine zu schaffen, mit welcher es möglich ist, sowohl eine mechanische Grobreinigung als auch eine mechanische Feinreinigung der Abwässer in einem Arbeitsgang durchzuführen. Die Evolventen-Siebbandmaschine soll somit so gestaltet sein, daß die Stufe einer vorgeschalteten Grobreinigung entfallen kann.

Die der Erfindung zugrunde liegende Aufgabe wird dadurch gelöst, daß auf der Anströmseite der Einzelsiebe im Abstand a vom 30 bis 60 mm Stege vertikal angeordnet sind, deren Breite b 20 bis 60 mm beträgt, und die eine Dicke von 3 bis 5 mm aufweisen. In der Regel dient die Innenseite der Einzelsiebe als Anströmseite. In Einzelfällen kann es jedoch auch vorteilhaft sein, das Abwasser von außen nach innen strömen zu lassen, wobei dann die Evolventenform den Strömungsbedingungen anzupassen wäre. Unter der Bezeichnung "Abwasser" sind alle nach Gebrauch veränderte oder verändert abfließende sowie jede in eine Kanalisation gelangende Wässer zu verstehen. Somit fallen auch schmutzgutbeladenes Brauchwasser oder anfallendes Wasser aus Kühlwasserreinigungsanlagen unter diesen Begriff. Die auf der Außenseite angebrachten Siebgewebe können aus mehreren Teilen bestehen, wobei Kunststoffe oder Metalle als Werkstoffe eingesetzt werden. Als Stege können Blechstreifen eingesetzt werden, die aus größeren Platten gestanzt werden. Sie liegen einseitig durchgehend an den jeweiligen Siebgewebe an und sind somit ebenfalls der Evolventenform angepaßt. Es hat sich in überraschender Weise gezeigt, daß die angeordneten Stege eine Grobreinigung der Abwässer in der unmittelbarer Nähe der Siebgewebe ermöglichen, so daß auf die Vorschaltung eines Greiferrechens zur Grobreinigung verzichtet werden kann. Durch die angeordneten Stege werden die gröberen Feststoffe aus den Abwässern in den Einzelsieben aufgefangen und zusammen mit den kleineren Feststoffen, die von den Siebgeweben aufgefangen werden, zu einem rinnenförmigen Austrag für die abgesiebten Stoffe transportiert. Dadurch ist sichergestellt, daß bei dem Bau einer entsprechenden Abwasserreinigungsanlage lediglich der Platz vorzusehen ist, der nach dem Stand der Technik für die zur Feinreinigung vorgesehene Siebband- oder Siebtrommelmaschine vorgesehen war. Die Evolventen-Siebbandmaschine ermöglicht somit eine kombinierte Grob- und Feinreinigung der Abwässer in einem Arbeitsgang. Sollten im Abwasser lediglich grobe Feststoffe vorhanden sein, so kann auf die Feinreinigung durch Weglassen der Siebgewebe auf der Außenseite verzichtet werden, da die Stege durch Wellen, Rohre oder Winkelprofile mit den Ketten der Evolventen-Siebbandmaschine verbunden sind. Auf die Feinreinigung wird man in der Regel aber nicht verzichten.

Eine bevorzugte Ausgestaltung der Erfindung besteht darin, daß ein rinnenförmiger Austrag für die abgesiebten Stoffe unterhalb von Abspritzrohren durch ein oberes Kettenrad horizontal in dessen Längsachse verlaufend angeordnet ist. Durch die Anordnung des rinnenförmigen Austrags durch ein oberes Kettenrad horizontal in dessen Längsachse verlaufend wird der Abstand zu den Abspritzrohren in vorteilhafter Weise verringert, so daß sichergestellt ist, daß die abgesiebten Feststoffe beim Abspritzvorgang vollständig in den rinnenförmigen Austrag gelangen und nicht in das Abwasser zurückfallen. Darüber hinaus verbessert diese Anordnung die Zugänglichkeit zum rinnenförmigen Austrag durch die in der Regel seitlich außerhalb der Evolventen-Siebbandmaschine angeordnete Arbeitsbühne.

Gemäß einer weiteren bevorzugten Ausgestaltung der Erfindung ist das endlos rotierende Band kreisförmig als Trommelsieb angeordnet. Diese Maßnahme ermöglicht ein einfaches Nachrüsten bereits bestehender Trommelsiebe mit der Evolventen-Siebbandmaschine, da die Trommelsiebe in der Regel kreisförmig gestaltet sind.

Die Erfindung wird nachfolgend anhand der Zeichnung (Fig. 1 bis 4) näher und beispielhaft erläutert.
Fig. 1 zeigt eine perspektivische Darstellung der Evolventen-Siebbandmaschine.
Fig. 2 zeigt die Evolventen-Siebbandmaschine im Längsschnitt.
Fig. 3 zeigt die Evolventen-Siebbandmaschine im Querschnitt.
Fig. 4 zeigt ein Einzelsieb der Evolventen-Siebbandmaschine im Längs- und Querschnitt.

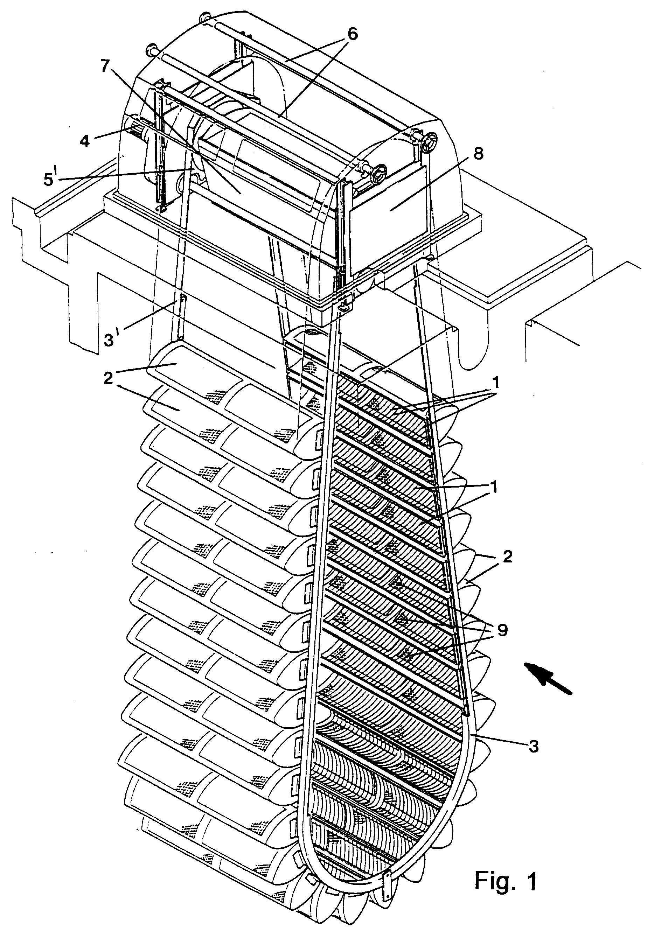

In Fig. 1 ist die Evolventen-Siebbandmaschine in vereinfachter schematischer Form perspektivisch dargestellt. Auf der Anströmseite der Einzelsiebe sind im Abstand a von 30 bis 60 mm Stege (1) vertikal angeordnet. Auf der Außenseite der Einzelsiebe sind die Siebgewebe (2) angeordnet. Die Einzelsiebe sind zu einem endlos rotierenden Band verbunden, die über einen Kettenantrieb in Bewegung versetzt werden, wobei die Kette in Kettenführungen (3,3') beweglich gelagert sind. Jede Kette läuft über ein Kettenrad (5'), das über einen außerhalb der Evolventen-Siebbandmaschine angeordneten Antrieb (4) in Bewegung versetzt wird. Unterhalb von Abspritzrohren (6) ist ein rinnenförmiger Austrag (7) für die abgesiebten Stoffe angeordnet, die über die Austrittsöffnung (8) aus der Evolventen-Siebbandmaschine abgeführt werden. Die Abwässer treten in Pfeilrichtung in die Evolventen-Siebbandmaschine ein und treten von den Feststoffen befreit seitlich durch die Siebgewebe (2) nach außen, wobei die groben Feststoffe (9) durch die vertikal angeordneten Stege (1) und die feinen Feststoffe durch die Siebgewebe (2) aufgefangen werden. Die groben Feststoffe (9) gelangen somit zusammen mit den feinen Feststoffen in den Einzelsieben nach oben zum rinnenförmigen Austrag (7).

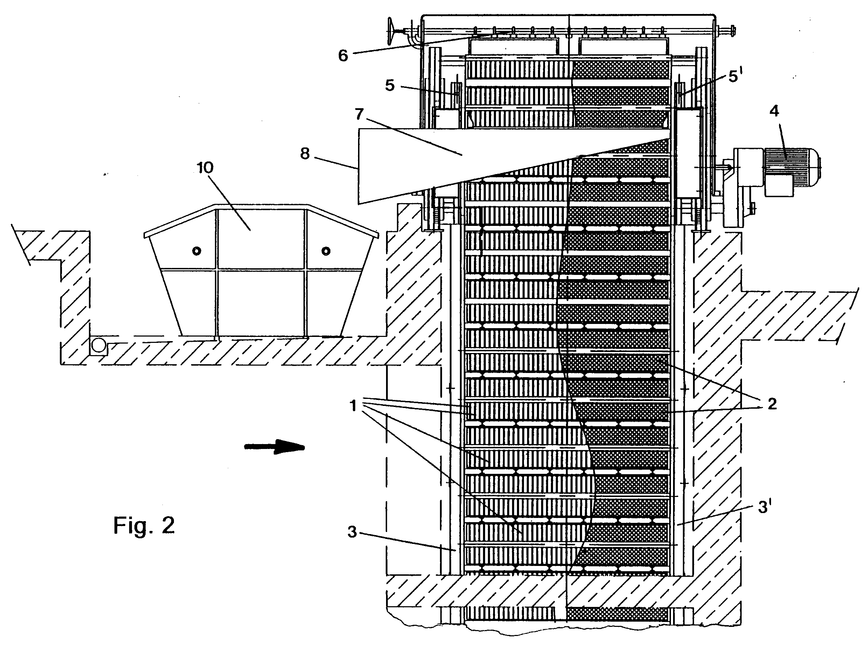

In Fig. 2 ist Evolventen-Siebbandmaschine im Längsschnitt dargestellt. Im oberen Teil der Evolventen-Siebbandmaschine sind die Kettenräder (5,5') dargestellt. Der rinnenförmige Austrag (7) weist einen schrägen Boden auf, so daß das Austreten der abgesiebten Feststoffe über die Austrittsöffnung (8) in den Container (10) auf relativ einfache Weise erfolgen kann. Darüber hinaus ist der rinnenförmige Austrag (7) von der seitlichen Arbeitsbühne, auf der der Container (10) steht, für Wartungszwecke relativ leicht zugänglich, da der rinnenförmige Austrag (7) unterhalb der Abspritzrohre (6) durch das obere Kettenrad (5) horizontal in dessen Längsachse verlaufend angeordnet ist.

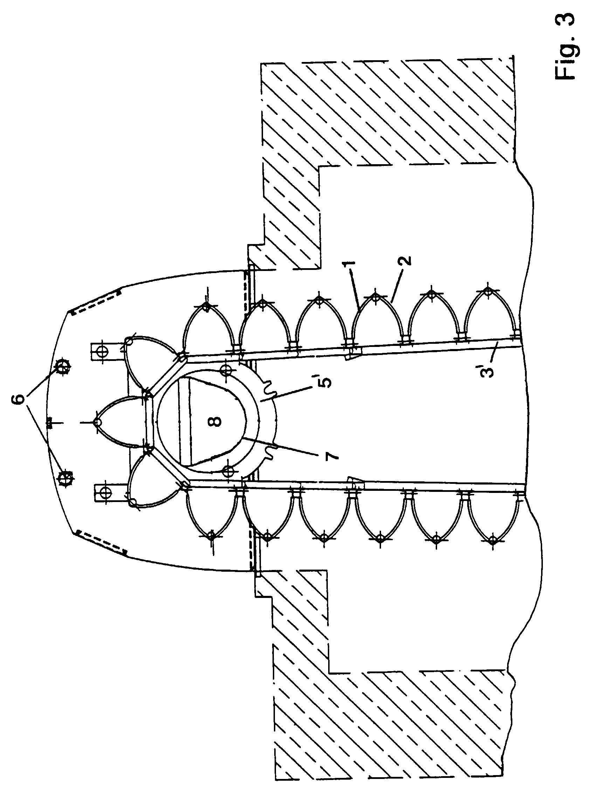

In Fig. 3 ist Evolventen-Siebbandmaschine im Querschnitt dargestellt. Durch die Anordnung des rinnenförmigen Austrags (7) unterhalb der Abspritzrohre (6) durch ein oberes Kettenrad (5) horizontal in dessen Längsachse verlaufend (nicht dargestellt) wird der Abstand des rinnenförmigen Austrags (7) zu den Abspritzrohren (6) in vorteilhafter Weise verkleinert, was ein wirkungsvolles Auffangen der abgesiebten Stoffe in vorteilhafter Weise erleichtert.

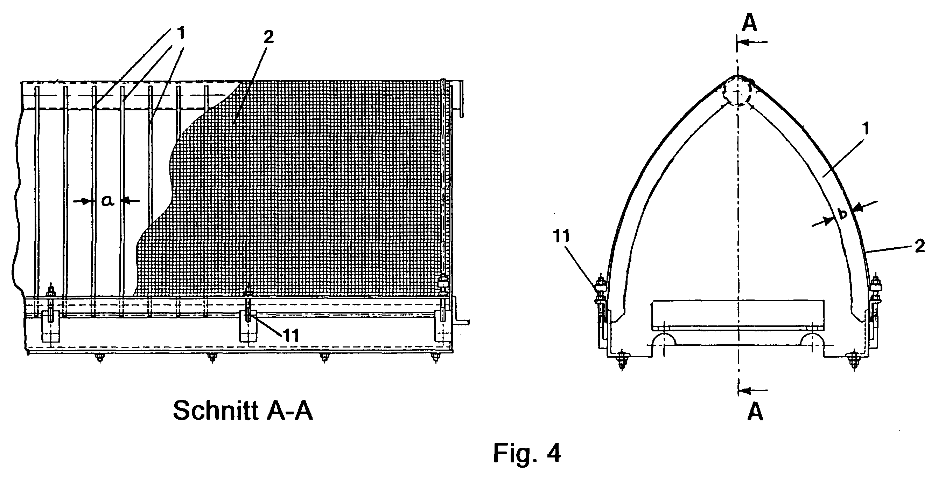

In Fig. 4 ist ein Einzelsieb sowohl im Längs- als auch im Querschnitt dargestellt. Auf der Anströmseite der Einzelsiebe sind die Stege (1) vertikal im Abstand a von 30 bis 60 mm nebeneinander angeordnet. Auf der Außenseite des Einzelsiebes ist ein Siebgewebe (2) angeordnet. Die vertikal angeordneten Stege (1) weisen eine Breite b von 20 bis 60 mm auf. Das Fixieren der Siebgewebe (2) auf den Stegen (1) erfolgt mit Hilfe von Spannvorrichtungen (11). Die Stege (1) werden aus Blechplatten ausgestanzt, die eine Dicke von 3 bis 5 mm aufweisen. Gemäß den außen angeordneten Siebgeweben (2) sind die Stege (1) ebenfalls der Evolventenform angepaßt.

## Patentansprüche

1. Evolventen-Siebbandmaschine mit zu einem endlos rotierenden Band verbundenen Einzelsieben, deren jeweiliger Querschnitt evolventenförmig gestaltet ist und die auf ihrer Außenseite jeweils ein Siebgewebe (2) aufweisen, dadurch gekennzeichnet, daß auf der Anströmseite der Einzelsiebe im Abstand a von 30 bis 60 mm Stege (1) vertikal angeordnet sind, deren Breite b 20 bis 60 mm beträgt und die eine Dicke von 3 bis 5 mm aufweisen.

2. Evolventen-Siebbandmaschine nach Anspruch 1 dadurch gekennzeichnet, daß ein rinnenförmiger Austrag (7) für die abgesiebten Stoffe unterhalb von Abspritzrohren (6) durch ein oberes Kettenrad (5) horizontal in dessen Längsachse verlaufend angeordnet ist.

3. Evolventen-Siebbandmaschine nach Anspruch 1 oder Anspruch 2, dadurch gekennzeichnet, daß das endlos rotierende Band kreisförmig als Trommelsieb angeordnet ist.
